# EUROPÄISCHE PATENTSCHRIFT

(11) **EP 1 381 788 B1**
(45) Veröffentlichungstag und Bekanntmachung des Hinweises auf die Patenterteilung: **26.10.2005**
(21) Anmeldenummer: 02735241.8
(22) Anmeldetag: 10.04.2002
(51) Int. Cl.: F16D 13/52

(54) **GETRIEBE MIT RASSELFREIER VERBINDUNG ZWISCHEN KUPPLUNGSKORB UND MITNEHMERSCHEIBE**
GEARING HAVING A RATTLE-FREE CONNECTION BETWEEN THE CLUTCH BASKET AND THE DRIVING DISK
ENGRENAGE AVEC LIAISON SANS CLIQUETIS ENTRE CLOCHE D'EMBRAYAGE ET PLATEAU D'ENTRAINEMENT

(30) Priorität: 11.04.2001 DE 10118233
(43) Veröffentlichungstag der Anmeldung: 21.01.2004
(73) Patentinhaber: Volkswagen Aktiengesellschaft, 38436 Wolfsburg (DE)
(72) Erfinder: SCHREIBER, Wofgang, 38550 Isenbüttel (DE); STEINBERG, Ingo, 38547 Calberlah (DE)
(86) Internationale Anmeldenummer: PCT/EP2002/003963
(87) Internationale Veröffentlichungsnummer: WO 2002/084135

(56) Entgegenhaltungen:
- JP-A- 8 061 384
- US-A- 4 640 294

## Beschreibung

Die Erfindung betrifft ein Getriebe mit rasselfreier Verbindung zwischen Kupplungskorb und Mitnehmerscheibe, bei der die Mitnehmerscheibe an ihrem Außenumfang Zähne und Zahnlücken aufweist, die mit korrespondierenden Zahnlücken bzw. Zähnen im Kupplungskorb eine Steckverzahnung bilden.

Derartige Verbindungen zwischen der mit einer Getriebeeingangswelle antriebswirksam verbundenen Mitnehmerscheibe und dem beispielsweise die Reibbeläge tragenden Kupplungskorb eines Getriebes sind aus dem Stand der Technik allgemein bekannt. Die Paarung der Zähne bzw. Zahnlücken der Mitnehmerscheibe und des Kupplungskorbes erfolgt dabei üblicherweise so, daß die Mitnehmerscheibe mit einem geringen Spiel bei der Montage des Getriebes in den Kupplungskorb einsteckbar ist.

Da insbesondere Dieselmotoren, aber auch Motore wie mit einer geringen Zylinderanzahl, insbesondere bei niedrigen Motordrehzahlen und geringem Motordrehmoment Drehungleichförmigkeiten aufweisen, führt ein für den Zusammenbau von Mitnehmerscheibe und Kupplungskorb vorteilhafte Umfangsspiel zu nachteiligen Rasselgeräuschen und Verschleißerscheinungen an den Zähnen von Mitnehmerscheibe und Kupplungskorb.

Zur Vermeidung dieser Nachteile ist es aus dem Stand der Technik bekannt, die Zahnflanken der Zähne von Mitnehmerscheibe und/oder Kupplungskorb durch nitrieren zu härten um damit die Verschleißfestigkeit zu erhöhen. Außerdem kann ein zu großes und damit nachteiliges Zahnflankenspiel dadurch reduziert werden, daß Paarungen von Mitnehmerscheiben und Kupplungskörben auszuwählen werden, bei denen die beschriebene Steckverzahnung zu einem möglichst geringen Zahnflankenspiel führt.

Diese bekannten Maßnahmen zur Reduzierung des Zahnflankenspiels und damit zur Vermeidung von Rasselschwingungen in diesem Bereich des Getriebes sind vergleichsweise teuer und aufwendig. Die Aufgabe und die Erfindung ist es daher, eine möglichst kostengünstige und das oben beschriebene Getrieberasseln sicher vermeidende Verzahnungsverbindung zwischen einer Mitnehmerscheibe und einem Kupplungskorb vorzustellen.

Die Lösung dieser Aufgabe ergibt sich aus den Merkmalen der Ansprüche 1 und 4, während vorteilhafte Ausgestaltungen und Weiterbildungen der Erfindung den Unteransprüchen entnehmbar sind.

Demnach wird also vorgeschlagen, wenigstens einen der Zähne der Mitnehmerscheibe und/oder wenigstens einen der Zähne des Kupplungskorbes mit axial ausgerichteten Schlitzen zu versehen. Ebenso sind derartige Schlitze in den Zahnlücken des Kupplungskorbes sinnvoll.

Diese Schlitze führen im Bereich der Steckverzahnung zwischen Mitnehmerscheibe und Kupplungskorb zu einer gezielten Materialschwächung in Umfangsrichtung, durch die die Zähne bzw. Zahnlücken etwas biegeweicher als ohne diesen Schlitz sind. Das Einführen der Mitnehmerscheibe in die Verzahnung des Kupplungskorbes führt bei einem Übermaß in der Zahnbreite wenigstens einer der Zähne von Mitnehmerscheibe oder Kupplungskorb zu einer Aufweitung bzw. zu einem Zusammendrücken des benachbarten Verzahnungspartners (z.B. Zahnlücke im Kupplungskorb). Eine derartig in den Kupplungskorb spielfrei eingeführte Mitnehmerscheibe sitzt dadurch derart fest in der Steckverzahnung, daß keine Relativbewegung der beiden Bauteile zueinander mehr möglich ist. Auf diese Weise wird sehr vorteilhaft eine rasselfreie Verbindung zwischen der Mitnehmerscheibe und dem Kupplungskorb erzielt.

Weiterhin wird vorgeschlagen, daß bei mindestens einem Paar von korrespondierendem Zahn und Zahnlücke von Mitnehmerscheibe und Kupplungskorb der Zahn gegenüber der Zahnlücke in Umfangsrichtung verschoben ist. Bevorzugt sind mindestens zwei Zähne in entgegengesetzter Richtung verschoben.

Die Verschiebung des mindestens einen Zahnes gegenüber seiner korrespondierenden Zahnlücke führt dazu, daß bei dem Zusammenstecken von Mitnehmerscheibe und Kupplungskorb mittels der Steckverzahnung eine Verspannung von Zähnen und Zahnlücken von Mitnehmerscheibe und Kupplungskorb gegeneinander auftritt. Daher liegt auch hier eine feste Steckverzahnung zwischen Mitnehmerscheibe und Kupplungskorb vor, bei der keine Relativbewegung der beiden Bauteile zueinander mehr möglich ist. Bei einer derartigen Steckverzahnung wird sowohl die Schub- als auch die Zugflanke des Kupplungskorbes belastet.

Die gegenüber den korrespondierenden Zahnlücken verschobenen Zähne können sich sowohl am Außenumfang der Mitnehmerscheibe als auch des Kupplungskorbes befinden oder an dem Außenumfang beider Bauteile. Bevorzugt wird die Verschiebung jedoch nur an dem Außenumfang eines Bauteiles vorliegen, wobei insbesondere bevorzugt wird, jeweils mehrere Zähne in beide Richtungen in Umfangsrichtung zu verschieben. Hierdurch wird die Festigkeit der Steckverzahnung erhöht.

Zum leichteren Einführen der Mitnehmerscheibe in den Kupplungskorb können in einer vorteilhaften Ausgestaltung der Erfindung die Stirnseiten wenigstens eines Korbzahnes und/oder wenigstens eines Mitnehmerscheibenzahnes Einführschrägen aufweisen.

Eine Ausführungsform der Erfindung läßt sich anhand der Beschreibung beigefügten Zeichnung erläutern. Darin zeigen
- Fig. 1: einen vertikalen Schnitt durch ein Doppelkupplungsgetriebe im Bereich des Kupplungskorbes,
- Fig. 2: eine schematische Darstellung von Mitnehmerscheibe und Kupplungskorb vor ihrem Zusammenführen,
- Fig. 3: eine Darstellung wie in Fig. 2, jedoch mit einer weiteren Ausführungsform der Erfindung,
- Fig. 4: eine Darstellung von Mitnehmerscheibe und Kupplungskorb vor ihrem Zusammenführen, wobei zwei Zähne gegenüber den korrespondierenden Zahnlücken verschoben sind und
- Fig. 5: detaillierte Darstellung eines verschobenen Zahnes.

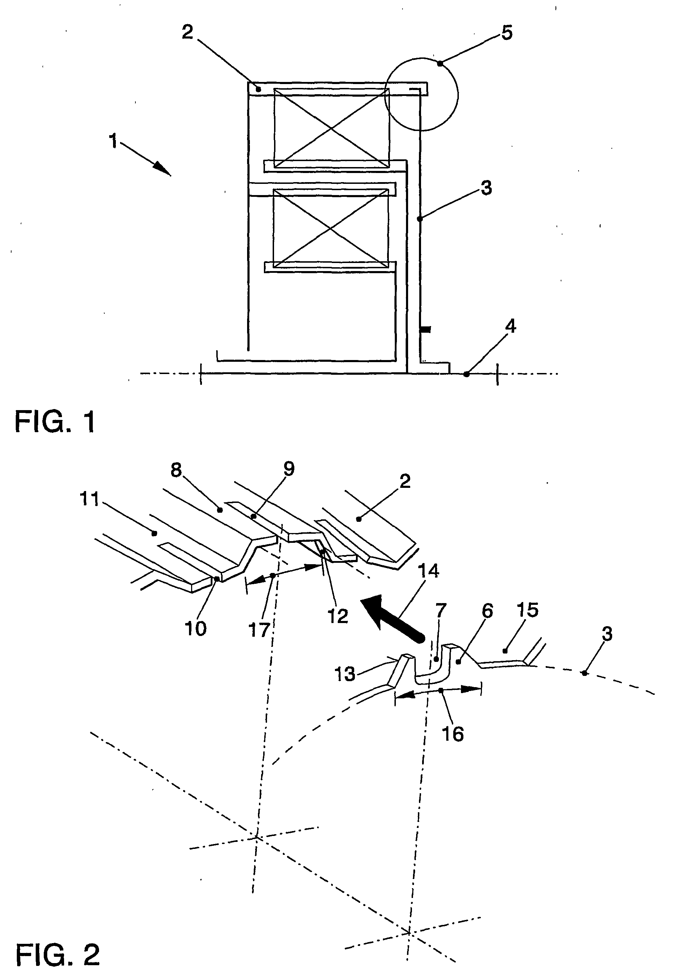

In Figur 1 ist mit der Bezugsziffer 1 der Teilbereich eines Doppelkupplungsgetriebes dargestellt, in dem der Kupplungskorb 2 antriebswirksam mit einer Mitnehmerscheibe 3 drehfest verbunden ist. Die Mitnehmerscheibe 3 sitzt ihrerseits drehfest und antriebswirksam auf einer Getriebeeingangswelle 4, welche von einer hier nicht dargestellten Kurbelwelle eines Antriebsmotors angetrieben wird. Der Kupplungskorb 2 selbst dient in bekannter Weise als Träger für die Reibbeläge der beiden Kupplungen des Doppelkupplungsgetriebes.

Die antriebswirksame Verbindung zwischen der Mitnehmerscheibe 3 und dem Kupplungskorb 2 erfolgt in dem durch einen Kreis 5 näher gekennzeichneten Bereich mittels einer Steckverzahnung, die in Figur 2 in einer schematischen perspektivischen Darstellung gezeigt ist.

In dieser Figur 2 ist einerseits der Kupplungskorb 2 erkennbar, dessen Verbindungsbereich mit Zähnen 11 und Zahnlücken 8 versehen ist. In diesen Verzahnungsbereich 11, 8 können Zähne 6 und Zahnlücken 15 der Mitnehmerscheibe 3 eingreifen, die zur Erzielung der gewünschten Steckverbindung in Richtung des Pfeils 14 in den Kupplungskorb 2 einzuschieben ist.

Zur Erreichung der gewünschten rasselfreien, d. h. verdrehspielfreien, Steckverzahnungsverbindung zwischen der Mitnehmerscheibe 3 und dem Kupplungskorb 2 ist vorgesehen, daß wenigstens einer der Zähne 6 der Mitnehmerscheibe 3 einen radial nach außen öffnenden und axial ausgerichteten Schlitz 7 aufweist, der zu einer in ihren Auswirkungen zuvor genau festgelegten Verringerung der Biegesteifigkeit der rechts- und linksseitigen Bereiche des Zahnes 6 der Mitnehmerscheibe 3 führt.

Eine derartige gezielte Reduzierung der Biegesteifigkeit der Zähne 11 bzw. Zahnlücken 11 kann auch am Kupplungskorb 2 ausgeführt sein. Wie Figur 2 deutlich entnehmbar ist, können alternativ oder additiv neben den Zähnen 6 der Mitnehmerscheibe auch die Zähne 11 bzw. die Zahnlücken 8 mit Schlitzen 9, 10 versehen sein, die im Bereich der Steckverzahnung zwischen Mitnehmerscheibe und Kupplungskorb zu der gezielten Materialschwächung führen.

Zusätzlich zu den erwähnten Schlitzen ist die Zahndicke 16 wenigstens eines der Zähne 6 der Mitnehmerscheibe 3 größer ist als die Zahnlückenweite 17 der Mitnehmerscheibe 2, so daß die Mitnehmerscheibe 3 unter Aufbringung einer Einpresskraft derart fest in den Kupplungskorb eingeschoben werden kann, daß dies zu einer Aufweitung der Zahnlücken 8 im Bereich des Schlitzes 9 bzw. zu einem Zusammenpressen der Zähne 6, 11 im Bereich der Schlitze 7 und 10 führt. Die so auf die Zahnflanken der Steckverzahnungselemente aufgebrachte Normalkraft führt zu einer verdrehspielfreien Steckverzahnungsverbindung, bei der die sonst üblichen Rasselgeräusche vermieden werden.

Zum leichteren Einführen der Mitnehmerscheibe 3 in den Kupplungskorb 2, sind in diesem Ausführungsbeispiel der Erfindung an den Stirnseiten der Zähne 6, der Mitnehmerscheibe 3 und/oder an den Stirnseiten der Zahnlücken 8 des Kupplungskorbes Einführungsschrägen 12, 13 vorgesehen. Diese Einführungsschrägen 12, 13 können an allen Stirnseiten der Verzahnungspartner oder aber auch nur an einzelnen Zähnen oder Zahnlücken ausgebildet sein.

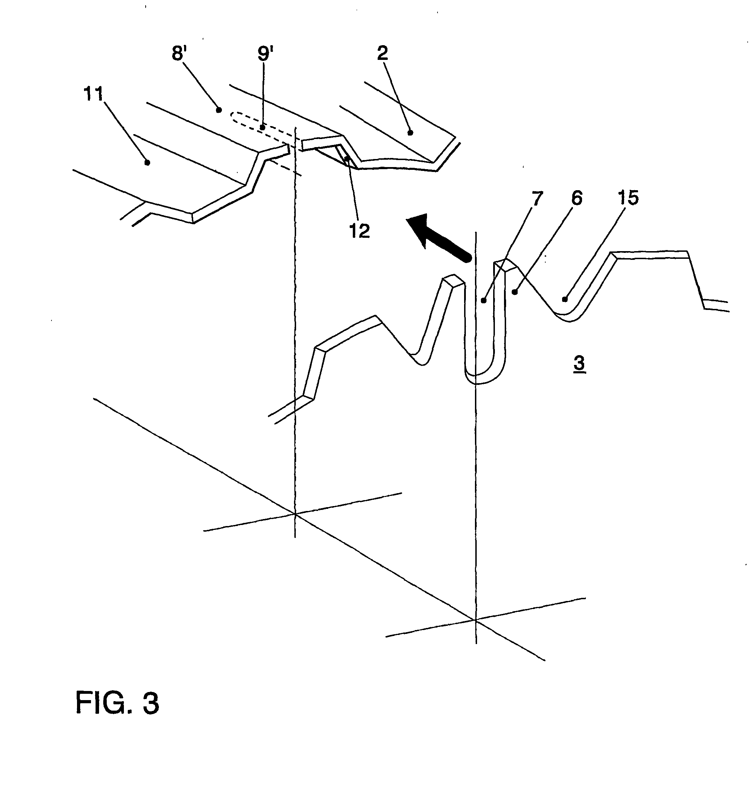

In einer weiteren Ausgestaltung der Erfindung kann gemäß Figur 3 vorgesehen sein, daß nur einzelne Zähne bzw. nur ein einzelner Zahn 6 der Mitnehmerscheibe 3 einen Schlitz 7 aufweist, während die Zähne 11 und Zahnlücken 8 des Kupplungskorbes 2 über keine solcher Schlitze verfügen.

Es kann jedoch auch vorgesehen sein, daß nur ein einzelner Zahn 6 der Mitnehmerscheibe 3 und die gegenüberliegende Zahnlücke 8' über einen solchen Schlitz 7, 9' verfügt.

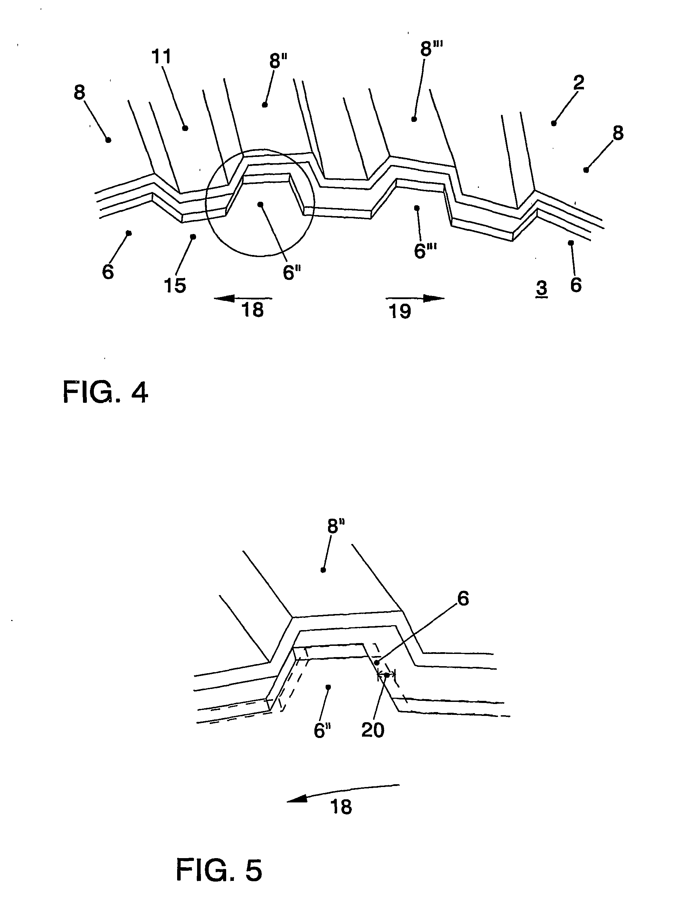

In Figur 4 sind Mitnehmerscheibe 3 und Kupplungskorb 2 eines erfindungsgemäßen Getriebes vor ihrem Zusammenführen in einer Steckverzahnung gezeigt, wobei die Zähne 6" und 6''' an dem Außenumgang von der Mitnehmerscheibe 3 gegenüber den korrespondierenden Zahnlücken 8" und 8''' an dem Außenumfang des Kupplungskorbes 2 verschoben sind. Hierbei wurde der Zahn 6" in Umfangsrichtung in die Richtung 18 verschoben und der Zahn 6''' in Umfangsrichtung in die Richtung 19, die der Richtung 18 entgegengesetzt ist. Detailliert wird die Verschiebung des Zahnes 6" in der Figur 5 gezeigt, die den in der Zeichnung 4 markierten Ausschnitt vergrößert zeigt. Hier ist gezeigt, daß der Zahn 6" gegenüber der Position 6 (gestrichelt gezeichnet), die exakt der Position der korrespondierenden Zahnlücke entspricht, um die Länge 20 in Umfangsrichtung in Richtung 18 verschoben wurde. Durch die Verschiebung der Zähne 6" und 6''' tritt bei der Steckverzahnung von Mitnehmerscheibe 3 und Kupplungskorb 2 eine Verspannung der Zähne 6" und 6''' mit den korrespondierenden Zahnlücken 8" und 8''' auf, wodurch eine feste Steckverbindung zwischen Mitnehmerscheibe 3 und Kupplungskorb 2 bewirkt wird, bei der keine Relativbewegung der beiden Bauteile zueinander mehr möglich ist.

### BEZUGSZEICHENLISTE

- 1: Doppelkupplungsgetriebe im Bereich der Doppelkupplung
- 2: Kupplungskorb
- 3: Mitnehmerscheibe
- 4: Getriebeeingangswelle
- 5: Einzelheit
- 6: Mitnehmerscheibenzahn
- 6": Mitnehmerscheibenzahn (verschoben in Richtung 18)
- 6''': Mitnehmerscheibenzahn (verschoben in Richtung 19)
- 7: Schlitz
- 8: Kupplungskorbzahnlücke
- 8': Kupplungskorbzahnlücke
- 8": Kupplungskorbzahnlücke (zum Zahn 6")
- 8''': Kupplungskorbzahnlücke (zum Zahn 6''')
- 9: Schlitz
- 9': Schlitz
- 10: Schlitz
- 11: Kupplungskorbzahn
- 11": Kupplungskorbzahn (verschoben in Richtung 18)
- 11''': Kupplungskorbzahn (verschoben in Richtung 19)
- 12: Einführschräge
- 13: Einführschräge
- 14: Einbaurichtung
- 15: Mitnehmerscheibenzahnlücke
- 15": Mitnehmerscheibenzahnlücke (zum Zahn 11")
- 15''': Mitnehmerscheibenzahnlücke (zum Zahn 11''')
- 16: Zahndicke
- 17: Zahnlückenweite
- 18: Umfangsrichtung
- 19: Umfangsrichtung (entgegengesetzt zu 18)
- 20: Verschiebungslänge (zum Zahn 6")

## Patentansprüche

1. Getriebe mit rasselfreier Verbindung zwischen Kupplungskorb (2) und Mitnehmerscheibe (3), bei der die Mitnehmerscheibe (3) an ihrem Außenumfang über Zähne (6) und Zahnlücken (15) verfügt, bei der der Kupplungskorb (2) an seinem Außenumfang zu den Zähnen (6) und Zahnlücken (15) der Mitnehmerscheibe (3) korrespondierende Zähne (11) und Zahnlücken (8) aufweist und bei der die Mitnehmerscheibe (3) im Sinne einer Steckverzahnung axial in den Kupplungskorb (2) einsteckbar ist, **dadurch gekennzeichnet, daß** wenigstens einer der Zähne (6) der Mitnehmerscheibe (3) und/oder wenigstens einer der Zähne (11) des Kupplungskorbes (2) axial ausgerichtete Schlitze (7, 10) aufweisen, und daß die Zahndicke (16) wenigstens einer der Zähne (6) der Mitnehmerscheibe (3) größer ist als wenigstens eine der Zahnlückenweiten (17) des Kupplungskorbes (2).

2. Getriebe gemäß Anspruch 1, **dadurch gekennzeichnet, daß** wenigstens einer der Zahnlücken (8) des Kupplungskorbes (2) einen Schlitz (11) aufweist.

3. Getriebe nach einem oder mehreren der Ansprüche 1 bis 2, **dadurch gekennzeichnet, daß** die Stirnseiten wenigstens einer Korbzahnlücke (9) und/oder wenigstens eines Mitnehmerscheibenzahnes (6) Einführungsschrägen (12, 13) aufweisen.

4. Getriebe mit rasselfreier Verbindung zwischen Kupplungskorb (2) und Mitnehmerscheibe (3), bei der die Mitnehmerscheibe (3) an ihrem Außenumfang über Zähne (6) und Zahnlücken (15) verfügt, bei der der Kupplungskorb (2) an seinem Außenumfang zu den Zähnen (6) und Zahnlücken (15) der Mitnehmerscheibe (3) korrespondierende Zähne (11) und Zahnlücken (8) aufweist und bei der die Mitnehmerscheibe (3) im Sinne einer Steckverzahnung axial in den Kupplungskorb (2) einsteckbar ist, **dadurch gekennzeichnet, daß** bei mindestens einem Paar von korrespondierendem Zahn (6", 11") und Zahnlücke (8", 15"), wobei sich der Zahn an dem Außenumfang von der Mitnehmerscheibe (3) oder dem Kupplungskorb (2) befinden kann, der Zahn (6", 11") gegenüber der Zahnlücke (8", 15") in Umfangsrichtung in einer ersten Richtung (18) verschoben ist.

5. Getriebe gemäß Anspruch 4, **dadurch gekennzeichnet, daß** bei mindestens einem weiteren Paar von korrespondierendem Zahn (6''', 11''') und Zahnlücke (8"', 15'''), wobei sich der Zahn an dem Außenumfang von der Mitnehmerscheibe (3) oder dem Kupplungskorb (2) befinden kann, der Zahn (6''', 11''') gegenüber der Zahnlücke (8''', 15''') in Umfangsrichtung in der der ersten Richtung (18) entgegengesetzten Richtung (19) verschoben ist.

6. Getriebe gemäß Anspruch 5, **dadurch gekennzeichnet, daß** der mindestens eine gegenüber der korrespondierenden Zahnlücke (8", 15") in Umfangsrichtung in der ersten Richtung (18) verschobene Zahn (6", 11") und der mindestens eine weitere gegenüber der korrespondierenden Zahnlücke (8''', 15''') in Umfangsrichtung in der der ersten Richtung (18) entgegengesetzten Richtung (19) verschobene Zahn (6''', 11''') sich beide an dem Außenumfang von der Mitnehmerscheibe (3) oder dem Kupplungskorb (2) befinden.

7. Getriebe gemäß Anspruch 6, **dadurch gekennzeichnet, daß** mehrere gegenüber den korrespondierenden Zahnlücken (8") des Kupplungskorbes (2) in Umfangsrichtung in der ersten Richtung (18) verschobene Zähne (6") und mehrere weitere gegenüber den korrespondierenden Zahnlücken (8''') des Kupplungskorbes (2) in Umfangsrichtung in der der ersten Richtung (18) entgegengesetzten Richtung (19) verschobene Zähne (6''') sich an dem Außenumfang von der Mitnehmerscheibe (3) befinden.

## Claims

1. Transmission with a rattle-free connection between the clutch basket (2) and driving disc (3), in which the driving disc (3) has teeth (6) and tooth spaces (15) on its outer circumference, in which the clutch basket (2) has on its outer circumference teeth (11) and tooth spaces (8) corresponding to the teeth (6) and tooth spaces (15) of the driving disc (3), and in which the driving disc (3) can be plugged axially into the clutch basket (2) with the effect of a plug-type intermeshing, **characterized in that** at least one of the teeth (6) of the driving disc (3) and/or at least one of the teeth (11) of the clutch basket (2) have axially oriented slots (7, 10) and **in that** the tooth thickness (16) of at least one of the teeth (6) of the driving disc (3) is greater than at least one of the tooth space widths (17) of the clutch basket (2).

2. Transmission according to Claim 1, **characterized in that** at least one of the tooth spaces (8) of the clutch basket (2) has a slot (11).

3. Transmission according to one or more of Claims 1 and 2, **characterized in that** the end faces of at least one basket tooth space (9) and/or of at least one driving disc tooth (6) have introduction slopes (12, 13).

4. Transmission with a rattle-free connection between the clutch basket (2) and driving disc (3), in which the driving disc (3) has teeth (6) and tooth spaces (15) on its outer circumference, in which the clutch basket (2) has on its outer circumference teeth (11) and tooth spaces (8) corresponding to the teeth (6) and tooth spaces (15) of the driving disc (3), and in which the driving disc (3) can be plugged axially into the clutch basket (2) with the effect of a plug-type intermeshing, **characterized in that**, in the case of at least one pair of a corresponding tooth (6", 11") and tooth space (8", 15"), in which case the tooth may be located on the outer circumference of the driving disc (3) or of the clutch basket (2), the tooth (6", 11") is displaced circumferentially in a first direction (18) with respect to the tooth space (8", 15").

5. Transmission according to Claim 4, **characterized in that**, in the case of at least one further pair of a corresponding tooth (6"', 11"') and tooth space (8"', 15"'), in which case the tooth may be located on the outer circumference of the driving disc (3) or of the clutch basket (2), the tooth (6"', 11"') is displaced circumferentially in the direction (19) opposite to the first direction (18) with respect to the tooth space (8"', 15"').

6. Transmission according to Claim 5, **characterized in that**, the at least one tooth (6", 11") displaced circumferentially in the first direction (18) with respect to the corresponding tooth space (8", 15") and the at least one further tooth (6"', 11"') displaced circumferentially in the direction (19) opposite to the first direction (18) with respect to the corresponding tooth space (8"', 15"') are both located on the outer circumference of the driving disc (3) or of the clutch basket (2).

7. Transmission according to Claim 6, **characterized in that** the plurality of teeth (6") displaced circumferentially in the first direction (18) with respect to the corresponding tooth spaces (8") of the clutch basket (2) and a plurality of further teeth (6"') displaced circumferentially in the direction (19) opposite to the first direction (18) with respect to the corresponding tooth spaces (8"') of the clutch basket (2) are located on the outer circumference of the driving disc (3).

## Revendications

1. Engrenage ayant une liaison sans cliquetis entre la cloche d'embrayage (2) et le plateau d'entraînement (3), dans lequel le plateau d'entraînement (3) dispose sur sa circonférence extérieure de dents (6) et d'entre-dents (15), dans lequel la cloche d'embrayage (2) présente sur sa circonférence extérieure des dents (11) et des entre-dents (8) correspondant aux dents (6) et aux entre-dents (15) du plateau d'entraînement (3) et dans lequel le plateau d'entraînement (3) peut être branché axialement dans la cloche d'embrayage (2) à la manière d'une denture de branchement, **caractérisé en ce qu'**au moins une des dents (6) du plateau d'entraînement (3) et/ou au moins une des dents (11) de la cloche d'embrayage (2) présentent des fentes (7, 10) orientées axialement et que l'épaisseur de dent (16) d'au moins une des dents (6) du plateau d'entraînement (3) est supérieure à au moins une des largeurs d'entre-dents (17) de la cloche d'embrayage (2).

2. Engrenage selon la revendication 1, **caractérisé en ce qu'**au moins un des entre-dents (8) de la cloche d'embrayage (2) présente une fente (11).

3. Engrenage selon l'une quelconque ou plusieurs des revendications 1 à 2, **caractérisé en ce que** les faces frontales d'au moins un entre-dent de cloche (9) et/ou d'au moins une dent de plateau d'entraînement (6) présentent des biseaux d'introduction (12, 13).

4. Engrenage ayant une liaison sans cliquetis entre la cloche d'embrayage (2) et le plateau d'entraînement (3), dans lequel le plateau d'entraînement (3) dispose sur sa circonférence extérieure de dents (6) et d'entre-dents (15), dans lequel la cloche d'embrayage (2) présente sur sa circonférence extérieure des dents (11) et des entre-dents (8) correspondant aux dents (6) et aux entre-dents (15) du plateau d'entraînement (3) et dans lequel le plateau d'entraînement (3) peut être branché axialement dans la cloche d'embrayage (2) à la manière d'une denture de branchement, **caractérisé en ce que**, dans le cas d'au moins une paire composée de la dent correspondante (6'', 11'') et de l'entre-dent (8'', 15''), sachant que la dent peut se trouver sur la circonférence extérieure du plateau d'entraînement (3) ou de la cloche d'embrayage (2), la dent (6", 11'') est décalée par rapport à l'entre-dent (8'', 15'') dans le sens circonférentiel dans un premier sens (18).

5. Engrenage selon la revendication 4, **caractérisé en ce que**, dans le cas d'au moins une autre paire composée de la dent correspondante (6''', 11''') et de l'entre-dent (8''', 15'''), sachant que la dent peut se trouver sur la circonférence extérieure du plateau d'entraînement (3) ou de la cloche d'embrayage (2), la dent (6''', 11''') est décalée par rapport à l'entre-dent (8''', 15''') dans le sens circonférentiel dans le sens (19) inverse du premier sens (18).

6. Engrenage selon la revendication 5, **caractérisé en ce que** l'au moins une dent (6'', 11'') décalée par rapport à l'entre-dent correspondant (8'', 15'') dans le sens circonférentiel dans le premier sens (18) et l'au moins une autre dent (6''', 11''') décalée par rapport à l'entre-dent correspondant (8''', 15''') dans le sens circonférentiel dans le sens (19) inverse du premier sens (18) se trouvent toutes deux sur la circonférence extérieure du plateau d'entraînement (3) ou de la cloche d'embrayage (2).

7. Engrenage selon la revendication 6, **caractérisé en ce que** plusieurs dents (6'') décalées par rapport aux entre-dents correspondants (8") de la cloche d'embrayage (2) dans le sens circonférentiel dans le premier sens (18) et plusieurs autres dents (6''') décalées par rapport aux entre-dents correspondants (8''') de la cloche d'embrayage (2) dans le sens circonférentiel dans le sens (19) inverse du premier sens (18) se trouvent sur la circonférence extérieure du plateau d'entraînement (3).
